# EUROPEAN PATENT APPLICATION

(11) **EP 4 439 889 A1**
(43) Date of publication of application: **02.10.2024**
(21) Application number: 23203966.9
(22) Date of filing: 17.10.2023
(51) Int. Cl.: H02G 11/00, B60L 53/31

(54) **CHARGER**

(30) Priority: 27.03.2023 KR 20230039937; 08.08.2023 KR 20230103552
(71) Applicant: LG Electronics Inc., Yeongdeungpo-gu Seoul 07336 (KR)
(72) Inventor: SHIN, Jongyeon, 06772 Seoul (KR); KIM, Jintae, 06772 Seoul (KR); SHIM, Jeongwon, 06772 Seoul (KR)
(74) Representative: Vossius & Partner Patentanwälte Rechtsanwälte mbB

(57) **Abstract**

A charger comprises a main body to which a charging cable is connected; an arm body disposed on the main body and having an arm space; an arm guide accommodated in the arm space and guiding the charging cable; and an arm rail formed on the arm body and having an outlet through which the charging cable passes, wherein a portion of the charging cable accommodated in the arm space is disposed to have at least one curvature.

## Description

The present invention relates to a charger.

A charger is a device used to charge a storage battery.

An example of the charger may be an electric vehicle charger that charges a vehicle such as an electric vehicle, and electrical energy is supplied to a battery of the electric vehicle by connecting a charging connector provided at an end of a charging cable to a connection inlet installed in the electric vehicle.

In order to use the charging cable, the charging cable can be used after unwinding a coiled charging cable and withdrawing the charging cable. Due to a length of a pulled-out charging cable, a portion of a middle portion may touch a floor, and the portion touching the floor may be damaged by repeated use such as being worn out or contaminated by contaminants on the floor.

An example of a charger for an electric vehicle is an electric vehicle quick charger having a cable automatic alignment function disclosed in Korean Registered Patent Publication No. 10-2101479 B1 (May 26, 2020, published), and the electric vehicle quick charger having a cable automatic alignment function is a rapid charger that supplies charging power by connecting a charging cable, and comprises a cable alignment unit provided on a charger body and withdrawing and returning the charging cable, a sensor unit detecting charging using the charging cable or charging termination, and a control unit for controlling driving of the cable aligning unit to withdraw the charging cable when charging is detected by the sensor unit, and controlling driving of the cable aligning unit to return the charging cable when charging termination is detected by the sensor unit, the cable alignment unit comprises a driving roller and a pressure roller disposed at a predetermined interval from the driving roller, a driving module for rotating the roller is connected to the driving roller, the driving module may be a motor, and the pressure roller is connected with a pressure module which presses the roller, and the pressure module may be an elastic spring.

An example of a battery charging device capable of charging a battery is a battery charging device disclosed in Korean Patent Publication No. 10-2010-0108592A (October 7, 2010, published), and the battery charging device comprises a conduit portion configured to receive an outgoing transmission cable; a transmission cable connectable to a current source; and a transmission cable drive mechanism configured to draw the transmission cable into the conduit portion, wherein the transmission cable drive mechanism comprises a traction wire and a drive pulley, and comprises a first wheel facing a second wheel, wherein at least one of the first wheel and the second wheel is a driving wheel and at least one of the first wheel and the second wheel is coupled to the transmission cable and is configured to be retractable, and the transmission cable driving mechanism comprises a minor guiding pulleys, a major looping pulley, a lower pulley disposed under the main looping pulley to receive gravity, and a mass enhancement provided on the lower pulley, wherein a bi-directional rotational drive may be applied to at least one of the sub-guiding pulley and the main looping pulley, the lower pulley may be disposed in a guide channel, the mass enhancement such as a suspended weight, may be further augmented or replaced by an elastic element, such as a spring that is tensioned by being pulled down on a lower pulley.

The present embodiment is to provide a charger capable of minimizing friction and abrasion of a charging cable.

The present embodiment is to provide a charger capable of maintaining the curvature of a charging cable within an appropriate range.

The charger according to the present embodiment comprises a main body to which a charging cable is connected; an arm body disposed on the main body and having an arm space; an arm guide accommodated in the arm space and guiding the charging cable; and an arm rail formed on the arm body and having an outlet through which the charging cable passes.

A portion of the charging cable accommodated in the arm space may be disposed to have at least one curvature.

The arm body may be disposed above the main body.

The arm body may comprise a protruding body protruding forward.

The arm rail may be formed on a lower plate of the protruding body.

The lower plate may be disposed inclined to face a front lower direction.

The charger may further comprise at least one roller rotatably disposed on the lower plate and in contact with the charging cable.

The arm guide may comprise an arm bracket; and at least one arm pulley rotatably disposed on the arm bracket.

A pair of the arm guides may be provided.

The pair of arm guides may be disposed so that a portion from a first point of the charging cable to a second point of the charging cable has one curvature, the second point is located at the outlet.

The charging cable may comprise a first point; a second point located at the outlet; and a third point located between the pair of arm guides. The pair of arm guides may be disposed so that a portion from the first point to the third point has a first curvature, and a portion from the third point to the second point has a second curvature. The first curvature and the second curvature may be different.

The pair of arm guides may comprise a front guide and a rear guide,

The front guide may be inclined at an angle of 15° to 30° with respect to the vertical line.

The front guide and the rear guide may be inclined at the same angle or at different angles.

At least one of the pair of arm guides may be disposed inclined toward the rear.

The pair of arm guides may gradually become closer toward the lower side.

The arm guide is provided in plurality, at least one of the plurality of arm guides may be disposed to be rotated about a rotation axis.

The charger may further comprise an arm guide rail disposed on the arm body and slidingly guiding the arm guide.

The arm guide rail may have an arc shape or a long straight-line shape in the left and right directions.

A plurality of charging cables may be connected to the main body,

The arm rail may comprise a lower arm rail through which one of the plurality of charging cables passes, and an upper arm rail through which the other of the plurality of charging cables passes.

The arm body may comprise a lower protruding body in which the lower arm rail is formed, and an upper protruding body in which the upper arm rail is formed.

The upper protruding body may be more protruding forward than the lower protruding body.

The arm guide may be provided in plurality. The plurality of arm guides may comprise a lower arm guide accommodated in the lower protruding body; and an upper arm guide accommodated in the upper protruding body.

### BRIEF DESCRIPTION OF THE DRAWINGS

FIG. 1 is a perspective view of a charger according to this embodiment;
FIG. 2 is a side view of a charger according to this embodiment;
FIG. 3 is a rear view of the charger according to the present embodiment;
FIG. 4 is a side view in which the cable cover according to the present embodiment is separated;
FIG. 5 is a rear view in which the cable cover according to the present embodiment is separated;
FIG. 6 is a plan view showing the inside of the arm body according to the present embodiment;
FIG. 7 is a side view showing a cable guide and a guide rail according to this embodiment;
FIG. 8 is a side view showing a modified example of a cable guide according to this embodiment;
FIG. 9 is a cross-sectional view showing a bracket and a guide rail according to this embodiment;
FIG. 10 is a side view showing a gas spring according to this embodiment;
FIG. 11 is a cross-sectional view of a gas spring according to this embodiment;
FIG. 12 is a schematic diagram of a first example of a damper according to this embodiment;
FIG. 13 is a schematic diagram of a second example of a damper according to this embodiment;
FIG. 14 is a schematic diagram of a third example of a damper according to this embodiment;
FIG. 15 is a diagram when the charger according to the present embodiment charges an electric vehicle;
FIG. 16 is a cross-sectional view of an arm guide according to the present embodiment.
FIG. 17 is a diagram showing the other example of a charger according to this embodiment;
FIG. 18 is a diagram showing an example of an arm guide rail according to the present embodiment;
FIG. 19 is a diagram showing an example of an arm guide according to the present embodiment.
FIG. 20 is a view showing another example of an arm guide rail according to the present embodiment;
FIG. 21 is a view showing a roller disposed on the arm body according to the present embodiment;
FIG. 22 is a cross-sectional view showing a modified example of the arm body according to the present embodiment;
FIG. 23 is a bottom view showing a modified example of the arm body according to the present embodiment.

Hereinafter, detailed embodiments will be described in detail with reference to the accompanying drawings.

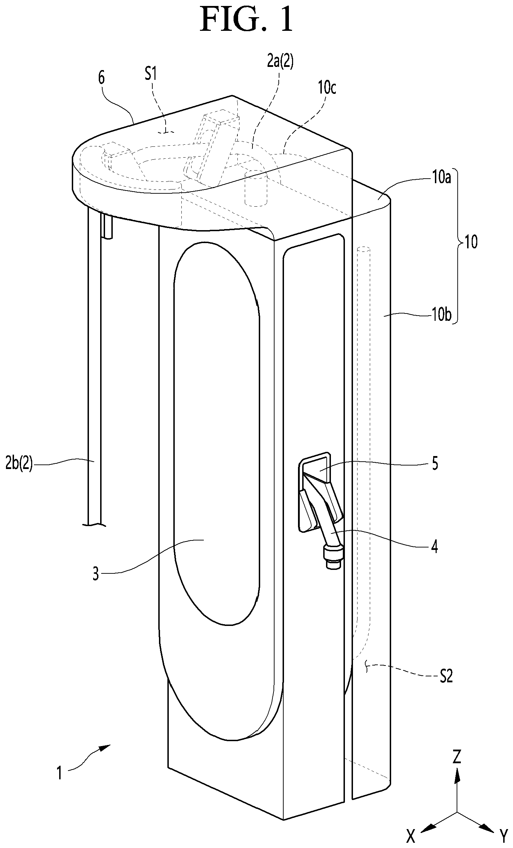

FIG. 1 is a perspective view of a charger according to this embodiment.

The charger may comprise a main body 1 and a charging cable 2.

The main body 1 may form an exterior of the charger. The main body 1 may comprise a housing forming an exterior. The main body 1 may transmit external power to the charging cable 2. A cable connector (not shown) to which the charging cable 2 is connected may be disposed in the main body 1.

The main body 1 may be provided with a screen 3 operated by a user. The screen 3 may be disposed on the front side of the main body 1.

The main body 1 may be provided with a connector holder 5 in which the connector 4 is provided on the charging cable 2 is mounted. The connector holder 5 may be disposed on one of the left and right sides of the main body 1.

An arm body 6 may be disposed above the main body 1. The arm body 6 may be disposed above the main body 1 and may be disposed to protrude in a forward direction. The lower surface of the arm body 6 may face the front of the main body 1. The lower surface of the arm body 6 may face the front of the screen 3.

An arm space S1 may be formed inside the arm body 6. A portion of the charging cable 2 may be accommodated in the arm space.

The arm body 6 may cover a portion of the charging cable 2 located on the upper side of the main body 1, and the arm body 6 may be an upper cover protecting the charging cable 2.

The charging cable 2 is configured to transmit external power supplied to the charger to the electric vehicle, and one end of the charging cable 2 may be electrically connected to the power source through a cable connector (not shown) of the main body 1, and the other end of charging cable 2 may be provided with a connector 4 connected to the connection inlet of the electric vehicle.

The charging cable 2 may be drawn from the inside of the arm body 6 to the outside of the arm body 6.

The charger may be a fast charger for rapidly charging the electric vehicle or a slow charger for slowly charging the electric vehicle.

The charging cable 2 may comprise a charging line through which current may flow and an outer shell surrounding the charging line. The charging cable 2 may further comprise a communication line through which data is transmitted. The communication line may be arranged inside the outer shell. The charger can charge the electric vehicle through a charging line and communicate with the electric vehicle through a communication line.

The charging cable 2 may comprise a cooling channel or a cooling pipe through which cooling fluid may pass. Examples of cooling fluids may be air, water, refrigerants, and the like.

The charging cable 2 may be a cable capable of transmitting a current of 30 A or more. The diameter of the charging cable 2 may be 30 mm or more.

The charging cable 2 may comprise a concealed portion 2a accommodated inside the charger and an exposed portion 2b drawn out of the charger.

The length of the exposed portion 2b may vary depending on the location of the electric vehicle, and the charger may guide the concealed portion 2a so that the length of the exposed portion 2b may be 3m to 8m, and the exposed portion 2b may have a maximum withdrawal length of 8 m.

It is preferable that the tensile force of the charging cable 2 is 30 N or less. The arm body 6 may guide the charging cable 2 so that the maximum tensile force of the charging cable 2 is 30N.

The charger may further comprise a cable cover 10.

The cable cover 10 may be disposed on the main body 1 to which the charging cable 2 is connected. An inner space S2 may be formed inside the cable cover 10. The cable cover 10 may be disposed on one surface of the main body 1, and the inner space S2 may be formed between the one surface of the main body 1 and the cable cover 10. The cable cover 10 may cover the charging cable 2 from the outside of the main body 1. The cable cover 10 may cover a portion of the charging cable 2 located outside the main body 1. The cable cover 10 may be disposed on the rear surface of the main body 1. The cable cover 10 may be a rear cover protecting the charging cable 2. The cable cover 10 may be disposed on the side of the main body 1. The cable cover 10 may be a side cover that protects the charging cable 2.

The cable cover 10 may be disposed on the rear surface of the body 1, and the cable cover 10 may comprise a rear plate 10a, a left plate 10b, and a right plate 10c.

The housing of the body 1, the arm body 6, and the cable cover 10 may constitute a case of the charger.

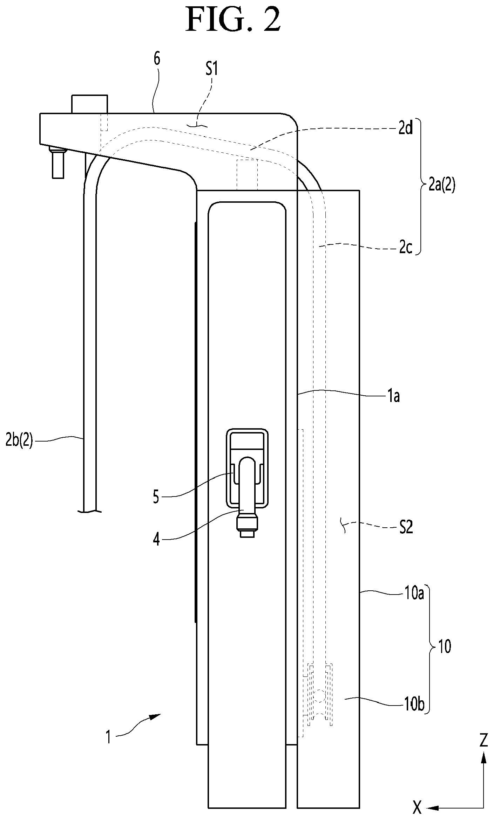

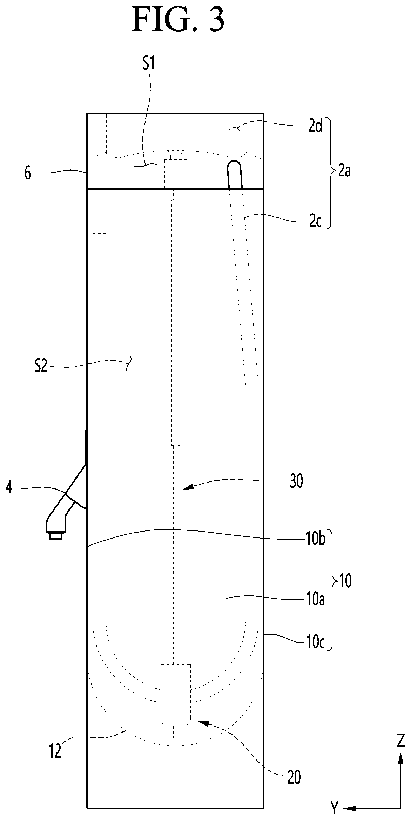

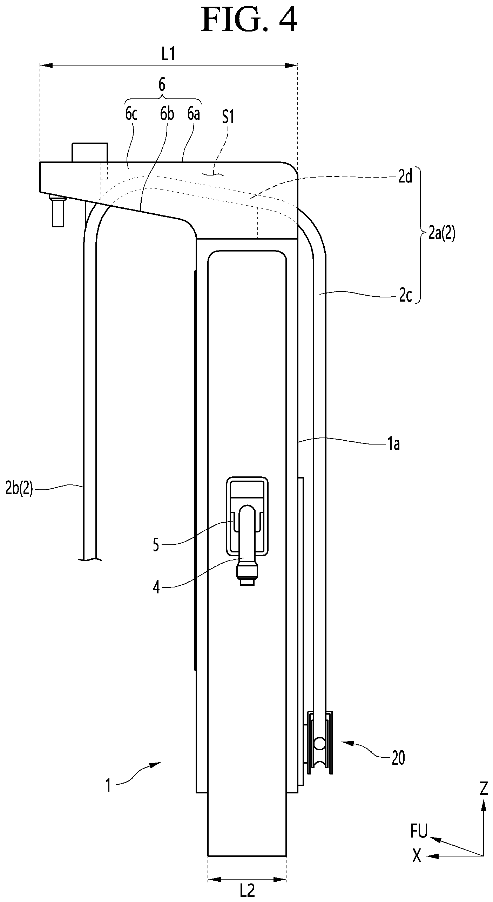

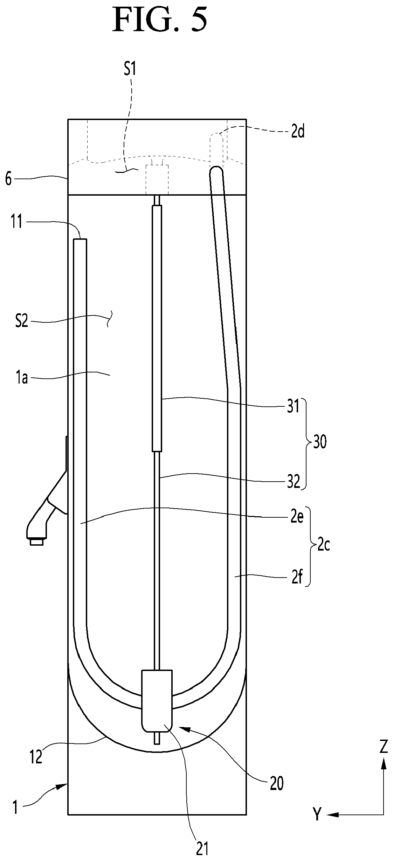

FIG. 2 is a side view of a charger according to this embodiment; FIG. 3 is a rear view of the charger according to the present embodiment; FIG. 4 is a side view in which the cable cover according to the present embodiment is separated; and FIG. 5 is a rear view in which the cable cover according to the present embodiment is separated;

An inner outlet 11 (refer to FIG. 5) may be formed in the main body 1. The charging cable 2 may extend to the outside of the main body 1 through the inner outlet 11. The inner outlet 11 may be an inner port through which the charging cable 2 is drawn out of the main body 1.

The inner outlet 11 may be formed closer to the top of the top and bottom of the main body 1.

The inner outlet 11 may be formed on a surface of the main body 1 facing the cable cover 10. The inner outlet 11 may be formed at a position that can be covered by the cable cover 10. The cable cover 10 may be a cover that hides the inner outlet 11 from being visible from the outside.

When the cable cover 10 is disposed on the rear surface of the body 1, the inner outlet 11 may be formed on the rear plate 1a of the main body 1. When the cable cover 10 is disposed on the side of the main body 1, the inner outlet 11 may be formed on the side plate of the main body 1.

As shown in FIG. 4, the arm body 6 may comprise an upper plate 6a, a lower plate 6b, and a border body 6c. The arm space S1 may be formed by the upper plate 6a, the lower plate 6b, and the border body 6c. The arm space S1 may be defined as a space surrounded by the upper plate 6a, the lower plate 6b, and the border body 6c.

The front-rear direction width L1 of the arm body 6 may be longer than the front-rear direction width L2 of the main body 1.

The upper plate 6a may be disposed above the border body 6c and may be horizontal.

The lower plate 6b may be disposed inclined at a predetermined angle. The lower plate 6b may be disposed obliquely toward the front upper side. The lower plate 6b may extend in the direction of the upper front side FU. The lower plate 6b may have an acute angle of inclination with the horizontal plane.

An arm body display may be disposed on the arm body 6. The arm body display may be disposed on at least one of the lower plate 6b and the border body 6c. A user may input a charging command through the arm body display. The user can check the charging information through the arm body display.

The charging cable 2 may extend into the inner space S2 through the inner outlet 11, extend from the inner space S2 to the arm space S1, and extend from the arm space S1 to the outside of the arm body (6).

One portion of the concealed portion 2a accommodated in the inner space S2 may be the inner cable 2c. The other portion of the concealed portion 2a accommodated in the arm space S1 may be an upper cable 2d.

The upper cable 2d may extend from the upper end of the inner cable 2c to the arm space S 1.

The upper cable 2d may be defined as a portion of the charging cable 2 accommodated in the arm space S1.

The charger may comprise a cable guide 20 and a damper 30.

As shown in FIG. 5, the inner cable 2c may be generally struck in a 'U' shape by the cable guide 2.

The inner cable 2c can be divided into an introduction portion 2e, an inverted portion 2f, and a guide portion 2h.

The introduction portion 2e may be a portion of the inner cable 2c between the inner outlet 11 and the cable guide 20.

The inverted portion 2f may be a portion after the cable guide 20 of the inner cable 2c.

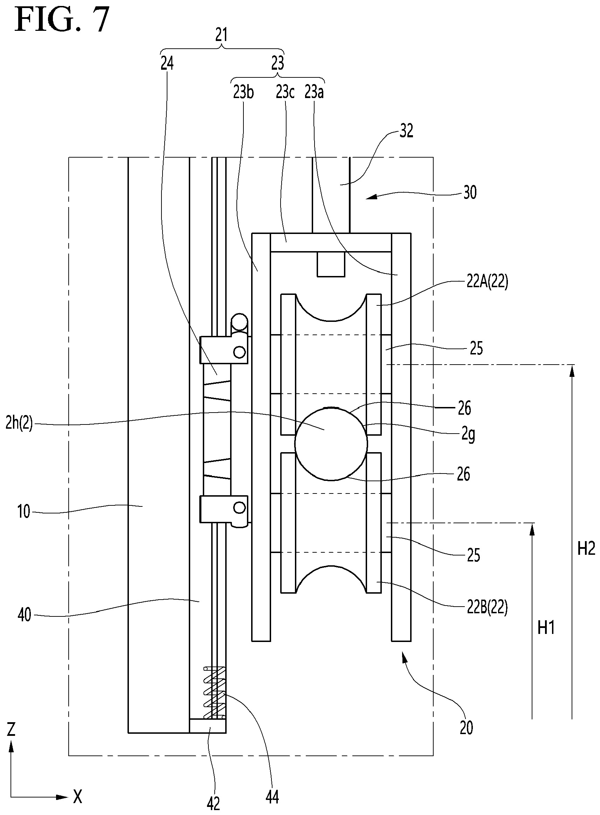

The guide portion 2h (refer to FIG. 7) may be a portion that comes into contact with the cable guide 20 and is guided by the cable guide 20.

The upper cable 2d may extend from an upper end of the inner cable 2c. The upper cable 2d may extend from an upper end of the inverted portion 2f.

The cable guide 20 may be movably accommodated in the inner space S2. The cable guide 20 may be movably disposed in the inner space S2. The cable guide 20 may guide the charging cable 2 while moving up and down by the charging cable 2, and may be a lifting guide.

As shown in FIG. 4, the cable guide 20 may be a pulley assembly including a bracket 21 and at least one pulley 22.

At least one pulley 22 may be rotatably installed on the bracket 21.

As shown in FIG. 5, the damper 30 may be connected to the bracket 21 and may restrict the cable guide 20 from moving rapidly. The damper 30 may be mounted on the main body 1 or the cable cover 40.

One example of the damper 30 may comprise a spring such as a coil spring, and the other example of the damper 30 may comprise a gas spring such as a compression gas spring or a tension gas spring. The damper 30 can be applied to any configuration capable of decelerating the bracket 21. Hereinafter, the charger will be described as the damper 30 including a gas spring.

The damper 30 may be disposed long in the vertical direction (Z) in the inner space (S2). The damper 30 may decelerate the cable guide 20 at the upper side of the cable guide 20.

The damper 30 may comprise a body 31 and a piston rod 32.

A space for accommodating gas may be formed in the body 31. The body 31 may be connected to one of the rear plate 1a of the main body 1, the back plate 10a of the cable cover 10, and the arm body 6.

The piston rod 32 may have a piston accommodated in a space of the body 31. The piston rod 32 may be connected to bracket 21. A lower end of the piston rod 32 may be connected to the bracket 21.

The cable guide 20 may be raised by the charging cable 2, and the cable guide 20 may be lowered by the weight of the cable guide 20 and the damping force of the damper 30.

The charger can guide the withdrawal of the charging cable 2 and can lead the charging cable 2 without a driving source such as a motor.

The charger may comprise a guide rail 40.

The guide rail 40 may guide the elevation of the cable guide 20. The guide rail 40 may be mounted on the main body 1 or the cable cover 40. The guide rail 40 may be disposed long in the vertical direction (Z) on the main body 1 or the cable cover 10.

FIG. 4 shows an example in which the guide rail 40 is disposed on the rear plate 1a of the main body 1, but the guide rail 40 is not limited to being disposed on the rear plate 1a of the main body 1, and the guide rail 40 may be disposed on the back plate 10a of the cover 10.

The charger may further comprise a lower cover (12, refer to FIG. 5) disposed inside the cable cover 10. The lower cover 12 may be disposed between the left plate portion 10b and the right plate portion 10c of the cable cover 10. The lower cover 12 may be formed in a convex shape toward the bottom of the charger.

The charger may comprise a spacer maintaining a distance between the charging cable 2 and the cable cover 10. The spacer may be a spacer disposed on the cable cover 10. The spacer may be disposed between the cable cover 10 and the charging cable 2, and may separate the outer surface of the charging cable 2 from the inner surface of the cable cover 10.

The charger may comprise a spacer maintaining a gap between the charging cable 2 and the arm body 6. The spacer may be a spacer disposed on the arm body 6. The spacer may be disposed between the arm body 6 and the charging cable 2, and may separate the outer surface of the charging cable 2 from the inner surface of the arm body 6.

The charger may comprise a spacer maintaining a distance between the introduction portion 2e and the inverted portion 2f. The spacer may be a spacer disposed on the main body 1 or the cable cover 10. The spacer may be disposed between the introduction portion 2e and the inverted portion 2f, and may space apart the introduction portion 2e and the inverted portion 2f from each other.

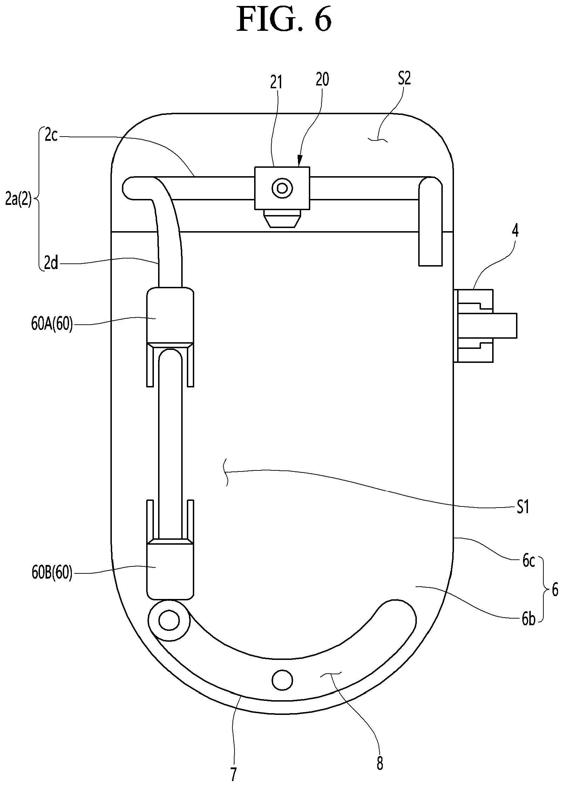

FIG. 6 is a plan view showing the inside of the arm body according to the present embodiment.

The charging cable 2 extending from the inner space S2 may be accommodated in the arm space S 1.

An arm rail 7 guiding the charging cable 2 may be formed on the arm body 6.

The arm rail 7 may be formed on the lower plate 6b of the arm body 6.

The arm rail 7 may have a forward convex arc shape.

An outlet 8 through which the charging cable 2 is taken out of the charger may be formed on the arm rail 7. The outlet 8 may be an outer port through which the charging cable 2 is pulled out of the charger.

The charging cable 2 may pass through the outlet 8 of the arm rail 7 of the arm body 6 and may be drawn out of the charger. The charging cable 2 can be guided along the arm rail 7 . The charging cable 2 may be guided in the front-back direction (X) and the left-right direction (Y) by the arm rail 7.

The arm body 6 may be disposed on the upper portion of the main body 1 so as to be able to move up and down. An arm body rail for guiding the elevation of the arm body 6 may be provided in the main body 1, and the arm body 6 may be elevated along the arm body rail.

An extension body covering between the main body 1 and the arm body 6 may be formed in the upper portion of the main body 1 or the lower portion of the arm body 6, and the arm body 6, the extension body, and the main body 1 may be arranged in the order in the vertical direction.

FIG. 7 is a side view showing a cable guide and a guide rail according to this embodiment.

The bracket 21 may be an assembly of a plurality of members. The bracket 21 may comprise a bracket body 23 and a slider 24.

The bracket body 23 may comprise a front plate portion 23a, a rear plate portion 23b, and an upper plate portion 23c.

The front plate portion 23a and the rear plate portion 23b may be spaced apart in the front-back direction (X).

Each of the front plate portion 23a and the rear plate portion 23b can support the pulley 22 rotatably.

The upper plate portion 23c may connect the upper end of the front plate portion 23a and the upper end of the rear plate portion 23b.

A connection portion to which the piston rod 32 of the gas spring 30 is connected may be formed in the upper plate portion 23c.

The slider 24 may be fastened to one of the front plate portion 23a and the rear plate portion 23b of the bracket body 23. The slider 24 may be located outside the bracket body 23.

The pulley 22 may be rotated about a horizontal support shaft 25. The support shaft 25 may be horizontally disposed on the bracket body 23. The pulley 22 may be rotated clockwise or counterclockwise around the support shaft 25.

A recessed portion 26 in which a portion of the charging cable 2 is accommodated is formed on the outer circumferential surface of the pulley 22, and the curvature of the outer surface of the charging cable 2 and the curvature of the recessed portion 26 may be the same. The outer surface 2g of the charging cable 2 may be in surface contact with the recessed portion 26, and the charging cable 2 may be guided to the pulley 22 with high reliability.

A plurality of pulleys 22 may be provided to the bracket 21.

The plurality of pulleys may comprise an upper pulley 22A and a lower pulley 22B.

The charging cable 2 may comprise a guide portion 2h guided to the upper pulley 22A and the lower pulley 22B. The guide portion 2h may be a portion disposed between the upper pulley 22A and the lower pulley 22B of the charging cable 2.

The upper pulley 22A may be rotatably disposed on the bracket 21. The upper portion of the guide portion 2h may guide the upper pulley 22A.

When the charging cable 2 is pulled in from the outside, the upper pulley 22A may guide the guide portion 2h. When the charging cable 2 is pulled out, the upper pulley 22A can be pushed upward by the guide portion 2h.

The lower pulley 22B may be rotatably disposed on the bracket 21. The height H1 of the lower pulley 22B may be lower than the height H2 of the upper pulley 22A. A lower portion of the guide portions 2h may be guided the lower pulley 22B.

When the charging cable 2 is pulled in from the outside, the lower pulley 22B can be pushed downward by the guide portion 2h. When the charging cable 2 is pulled out, the lower pulley 22b can guide the guide portion 2h.

A stopper 42 on which the bracket 21 is hung may be provided on the guide rail 40.

A damping spring 44 may be provided on at least one of the guide rail 40 and the bracket 21.

The damping spring 44 can dampen the bracket 21 when the cable guide 20 reaches its upper limit position or lower limit position. An example of damping spring 44 may be a coil spring.

An example of the damping spring 44 may be mounted on the bracket 21, and when the cable guide 20 approaches the upper limit position or the lower limit position, it is supported in contact with the guide rail 40 or the stopper 42. and buffer the bracket 21.

Another example of the damping spring 44 may be mounted on the guide rail 40 or the stopper 42, and when the cable guide 20 approaches the upper limit position or the lower limit position, it is supported in contact with the bracket 21 and buffer the bracket 21.

The other example of the damping spring 44 is mounted on the bracket 21 and can be connected to the guide rail 40 or the stopper 42, and when the cable guide 20 approaches the upper limit position or the lower limit position, buffer the bracket 21.

The damping spring 44 may be a damper that decelerates the cable guide 20.

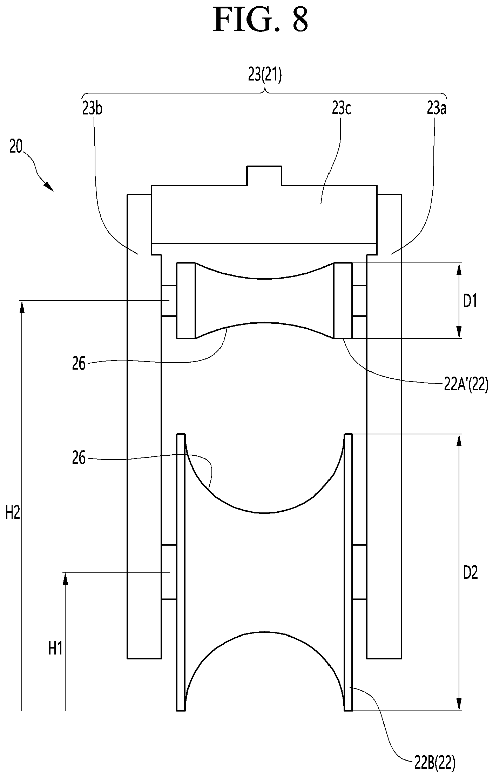

FIG. 8 is a side view showing a modified example of a cable guide according to this embodiment.

The outer diameter D1 of the upper pulley 22A' may be smaller than the outer diameter D2 of the lower pulley 22B.

The curvature of the recessed portion 26 of the upper pulley 22A may be smaller than the outer curvature of the charging cable 2.

The curvature of the recessed portion 26 of the lower pulley 22B may be the same as the curvature of the outer surface of the charging cable 2 .

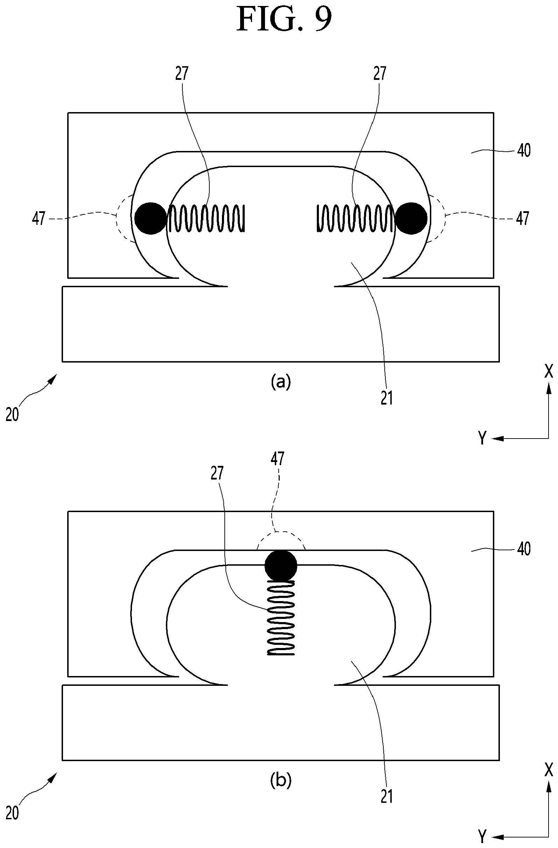

FIG. 9 is a cross-sectional view showing a bracket and a guide rail according to this embodiment;

The charger may comprise a locking mechanism.

The locking mechanism may lock/unlock the cable guide 20 to at least one of the guide rail 40, the cable cover 10, and the main body 1.

The bracket 21 of the cable guide 20 can be locked or unlocked to the guide rail 40. The bracket 21 to which no external force is applied may be locked and maintained by the guide rail 40 by a locking mechanism. When an external force is applied, the bracket 21 can be unlocked from the guide rail 40.

One example of a locking mechanism may comprise a ball spring 27.

A ball spring 27 may be disposed on the bracket 21, and a groove 47 may be formed in the guide rail 40 in which the ball spring 27 is inserted and caught.

The ball spring 27 may be a detent spring in which a detent ball is formed, the groove 47 may be a detent groove into which the detent ball is inserted, and the position of the cable guide 20 can be determined by the ball spring 27 and the groove 47.

When the ball of the ball spring 27 is inserted into the groove 47 and locked, the cable guide 20 does not arbitrarily move up and down, and can maintain its current position (That is, current height).

When an external force is applied to the charging cable 2, the external force can be transmitted to the cable guide 20, and the ball of the ball spring 27 can escape from the groove 47.

A plurality of grooves 47 may be formed in the guide rail 40. The plurality of grooves 47 may be spaced apart in the vertical direction Z of the guide rail 40.

The plurality of grooves 47 may comprise an upper limit groove, and when the cable guide 20 is in an upper limit position, the ball of the ball spring may be caught in the upper limit groove.

The plurality of grooves 47 may comprise the lower limit groove, and when the cable guide 20 is at the lower limit position, the ball of the ball spring may be caught in the lower limit groove.

The plurality of grooves 47 may comprise a center groove positioned between the upper limit groove and the lower limit groove. When the cable guide 20 is located at a specific position between the upper limit position and the lower limit position, the ball of the ball spring 27 can be caught in the center groove.

One example in which the ball springs 27 are disposed on both left and right sides of the bracket 21 and grooves 47 are recessed on both sides of the guide rail 40 is showed in (a) of FIG. 9.

The other example in which the ball spring 27 is disposed at the front or rear end of the bracket 21 and the groove 47 is recessed in the guide rail 40 is showed in (b) of FIG. 9.

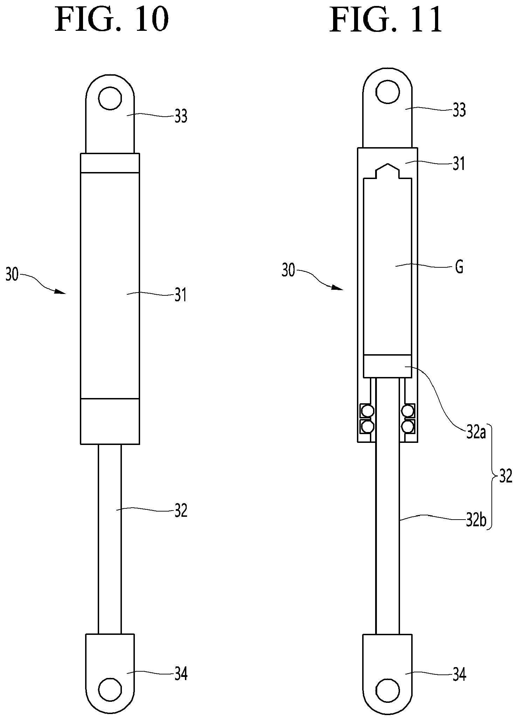

FIG. 10 is a side view showing a gas spring according to this embodiment; and FIG. 11 is a cross-sectional view of a gas spring according to this embodiment.

The damper 30 may comprise a gas spring.

The gas spring may comprise a body 31 and a piston rod 32.

A space in which gas G is accommodated may be formed inside the body 31. One example of the gas G accommodated inside the body 31 may be nitrogen gas (Nitrogen Gas).

The body 31 may comprise a body mounter 33. The body mounter 33 may be mounted on at least one of the main body 1, the arm body 6, and the cable cover 10.

The piston rod 32 may comprise a piston 32a accommodated in the space of the body 31 and a rod 32b protruding from the piston 32a.

One end of the piston rod 32 may be provided with a rod mount 34 to which the bracket 21 is mounted.

The piston 32a may be formed at one end of the rod 32b, and the rod mount 34 may be formed at the other end of the rod 32b.

The piston 32a may move up and down in the space of the body 31. The piston 32a can be raised in the space of the body 31 while the external force acts on the rod 32b and can compress the gas G.

When the external force is removed, the piston 32a may be pushed down by the compressed gas G, and the rod 32b may be moved down.

The gas spring may comprise a gas spring locking mechanism, and the gas spring locking mechanism may comprise a ball spring and a groove.

The ball spring may be disposed on any one of the body 31 and the piston rod 32.

The ball spring of the gas spring locking mechanism may have the same structure as the ball spring 27 (refer to FIG. 9) of the locking mechanism.

The groove may be formed on the other one of the body 31 and the piston rod 32, and the ball of the ball spring may be caught in the groove.

The groove of the gas spring locking mechanism may have the same structure as the groove (47, refer to FIG. 9) of the locking mechanism.

An example of the gas spring locking mechanism may comprise a ball spring disposed on the piston of the piston rod 32 and a groove formed on the body 31.

A plurality of grooves may be formed. A plurality of grooves may be formed in plurality in the longitudinal direction of the gas spring.

The plurality of grooves may comprise an upper limit groove, and when the cable guide 20 is in an upper limit position, the ball of the ball spring may be caught in the upper limit groove.

The plurality of grooves may comprise the lower limit groove, and when the cable guide 20 is at the lower limit position, the ball of the ball spring may be caught in the lower limit groove.

The plurality of grooves may comprise a center groove positioned between the upper limit groove and the lower limit groove. When the cable guide 20 is located at a specific position between the upper limit position and the lower limit position, the ball of the ball spring can be caught in the center groove.

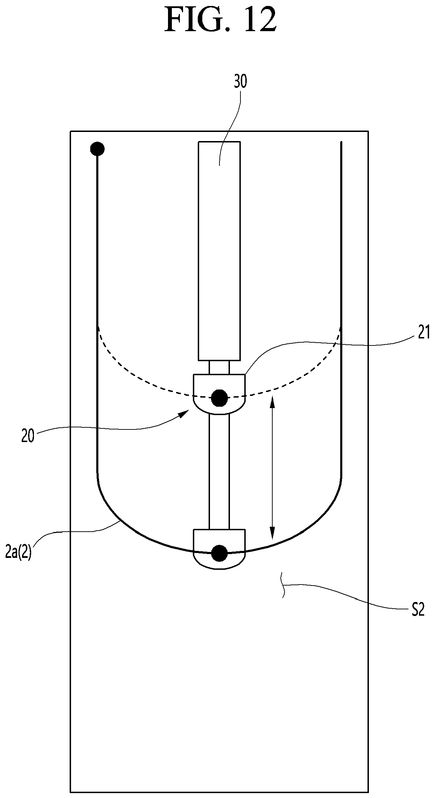

FIG. 12 is a schematic diagram of a first example of a damper according to this embodiment.

The damper 30 may comprise an upper gas spring.

An upper gas spring may be disposed above the cable guide 20.

A rod mount 34 to which the bracket 21 is mounted may be provided at the lower end of the upper gas spring.

An example of an upper gas spring may be a compression gas spring.

When an external force (pulling force) is applied to the cable 2, the cable guide 20 can be lifted by the cable 2 while guiding the cable 2.

When an external force (pulling force) is released from the cable 2, the cable guide 20 may be lowered by its own weight or by gas pressure.

The initial stroke value of the upper gas spring may be fixed and may be controlled through the guide rail 40.

When the piston rod 32 moves in the stroke range, the upper gas spring can be naturally damped by the gas pressure inside it.

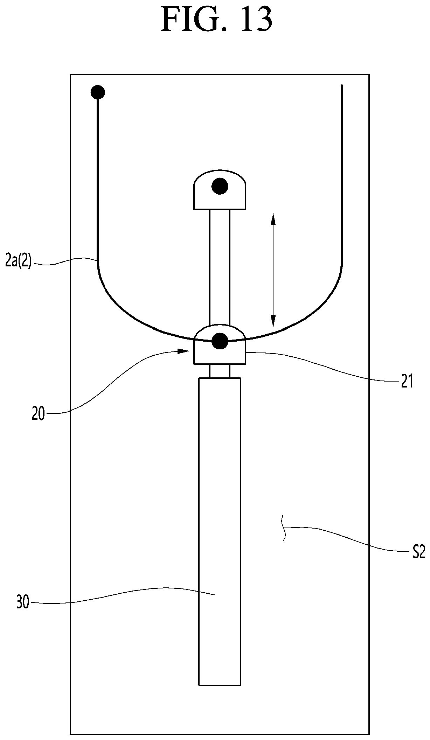

FIG. 13 is a schematic diagram of a second example of a damper according to this embodiment;

The damper 30 may comprise a lower gas spring.

A lower gas spring may be disposed below the cable guide 20.

A rod mount 34 to which the bracket 21 is mounted may be provided at an upper end of the lower gas spring.

An example of a lower gas spring may be a tension gas spring.

When an external force (pulling force) is applied to the cable 2, the cable guide 20 can be lifted by the cable 2 while guiding the cable 2.

When an external force (pulling force) is released from the cable 2, the cable guide 20 may be lowered by its own weight.

An initial stroke value of the lower gas spring may be fixed and may be controlled through the guide rail 40.

In the lower gas spring, the piston rod 32 may initially protrude as much as a set length, and may exert a damping function when restored.

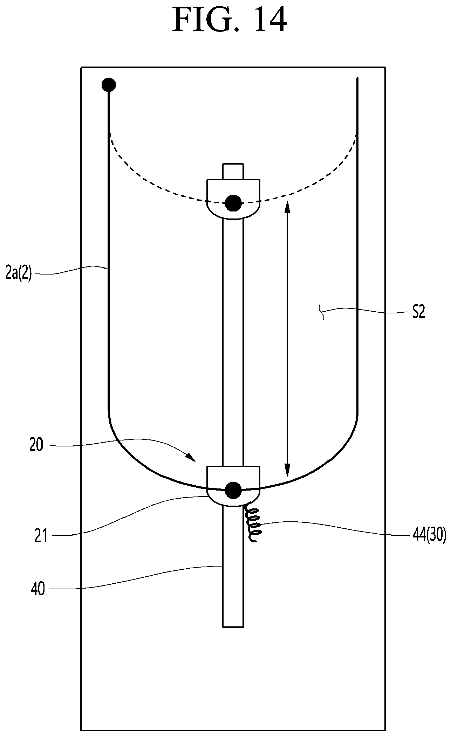

FIG. 14 is a schematic diagram of a third example of a damper according to this embodiment;

A third example of the damper may be a case that does not comprise a gas spring, and the bracket 21 and the pulley 22 may serve as weights.

When the external force (pulling force) applied to the charging cable 2 is removed, the cable guide 20 can descend by its own weight, and when the cable guide 20 descends, the length of the portion 2c accommodated in the inner space S2 can be increased.

The damper 30 may be disposed to minimize a sudden descent of the cable guide 20.

The damper 30 may comprise a damping spring 44 connected to the gasket 21. An example of damping spring 44 may be a coil spring.

The damping spring 44 may contact at least one of the main body 1, the cable cover 10, and the guide rail 40 or a separate stopper before the cable guide 20 reaches the lower limit position, and may decelerate the gasket 21 while being compressed.

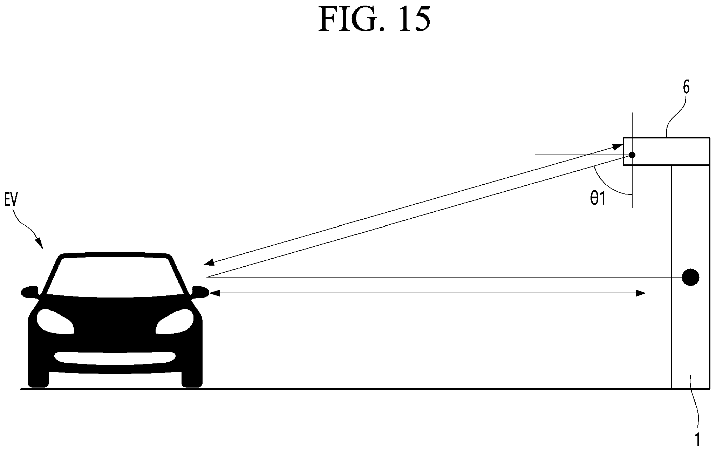

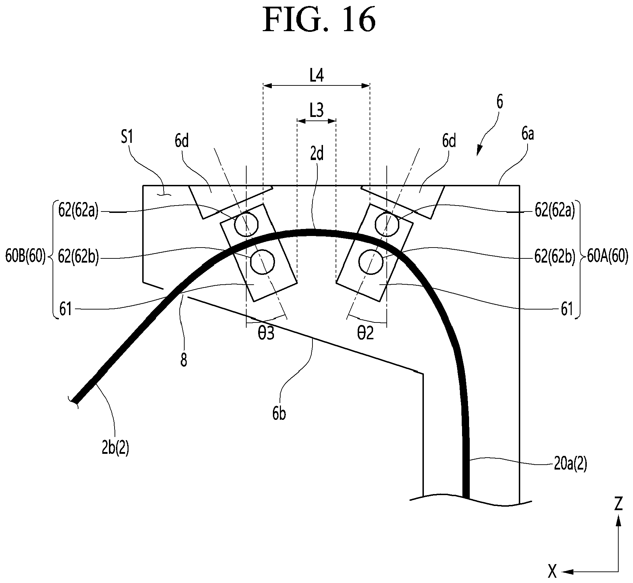

FIG. 15 is a diagram when the charger according to the present embodiment charges an electric vehicle; and FIG. 16 is a cross-sectional view of an arm guide according to the present embodiment.

As shown in FIG. 15, the electric vehicle (EV) can be charged at a location spaced apart from the charger, and the charging cable 2 extending to the electric vehicle (EV) is inclined at a maximum inclination angle θ1 with respect to the vertical line. The maximum inclination angle θ1 may be set in the range of 60° to 80°.

The charging cable 2 may preferably bent or curved at an angle of less than 90°, and the charger preferably guides the hidden portion 2a so that the hidden portion 2a is bent or curved at an angle of less than 90°.

The charger may comprise an arm guide 60 guiding the charging cable 2. The arm guide 60 may be disposed in the arm space S 1. The arm guide 60 may be disposed inside the arm body 6 and may guide the charging cable 2 inside the arm body 6.

The arm guide 60 may guide the upper cable 2d of the charging cable 2, and the arm guide 60 may guide the upper cable 2d so as not to be bent at an angle of 90° or more.

The upper cable 2d may be bent or curved with a predetermined curvature by the arm guide 60.

The arm guide 60 may be disposed such that the upper cable 2d has at least one curvature.

The upper cable 2d can be bent or curved with one curvature in the arm space S1, and can be bent or curved with two or more curvatures in the arm space S 1.

The arm guide 60 may comprise an arm bracket 61 and an arm pulley 62.

The arm bracket 61 may be installed on at least one of the upper plate 6a and the lower plate 6b of the arm body 6.

A mounter 6d for mounting the arm guide 60 may be disposed on the upper plate 6a or the lower plate 6b of the arm body 6.

An upper end of the arm bracket 61 may be mounted below a mounter 6d installed below the upper plate 6a of the arm body 6.

The arm bracket 61 can be mounted obliquely by the mounter 6d. An inclined surface may be formed on the mounter 6d, and the arm body 6 may be mounted on the inclined surface.

When the charging cable 2 is pulled from the outside, the charging cable 2 may be pulled out of the arm space S1 at a pulling out angel (eg, 60° to 80°).

When the charging cable 2 is restored by its own weight, it may be lead into the arm space S1 at an lead-in angle at which the charging cable 2 is drawn.

The pulling out angle of the charging cable 2 may be, for example, 60° to 80°, and the lead-in angle of the charge cable 2 may be flexible.

The pulling out angle and the lead-in angle of the charging cable 2 may be different, and the mounter 6d may be an auxiliary or compensator capable of correcting the pulling out angle and the lead-in angle of the charging cable 2 by the arm guide 60.

When the upper end of the arm bracket 61 is mounted on the upper plate 6a of the arm body 6, the lower end of the arm bracket 61 may be spaced apart from the lower plate 6b of the arm body 6 in the vertical direction (Z).

A pair of arm pulleys 62 may be provided to the arm bracket 61, and the pair of arm pulleys 62 may comprise an upper arm pulley 62a and a lower arm pulley 62b. The charging cable 2, in particular, the upper cable 2d may pass between the upper arm pulley 62a and the lower arm pulley 62b.

The upper arm pulley 62a may guide the upper cable 2d from the upper side of the upper cable 2d.

The lower arm pulley 62b may guide the upper cable 2d from the lower side of the upper cable 2d.

The shape and curvature of the upper cable 2d may be different according to the position of the arm guide 60, and the shape and curvature of the upper cable 2d may be different according to the number of arm guides 60.

When a plurality of arm guides 60 are disposed, the upper cable 2d may not be sharply bent and may extend with a curvature.

A pair of arm guides 60 may be provided to the arm body 6.

The pair of arm guides 60A and 60B allow the inner cable 2c to have one curvature based on the point(the first point or the upper cable start point) where the upper cable 2d are bent or curved from the inner cable 2c.

The pair of arm guides 60A and 60B may be approximately spaced apart in the front-rear direction (X).

The pair of arm guides 60A and 60B may be disposed so that the upper cables 2d may have two or more curvatures based on the first point.

Hereinafter, for convenience of description, the point located at the outlet 8 of the charging cable 2 may be referred to as a second point, and the point located between the pair of arm guides 60A and 60B of the charging cable 2 may be referred to as a third point.

The pair of arm guides 60A and 60B may be disposed so that the upper cable 2d has one curvature between the first point and the second point.

The pair of arm guides 60A and 60B may be disposed so that the upper cable 2d has a first curvature between a first point and a third point, a second curvature between the third point and the first point, and a first curvature and a second curvature are different.

At least one of the pair of arm guides 60A and 60B may be inclined in the arm space S 1.

The pair of arm guides 60A and 60B may be disposed gradually closer toward the lower side.

The distance L3 between the lower ends of the pair of arm guides 60A and 60B may be shorter than the distance L4 between the upper ends of the pair of arm guides 60 and 62.

In an example of the pair of arm guides 60A and 60B, only one of the pair of arm guides 60A and 60B may be inclined and the other may be vertically disposed.

In another example of the pair of arm guides 60A and 60B, each of the pair of arm guides 60A and 60B may be inclined.

The inclined arm guides 60A (60B) may be disposed inclined forward or backward at an angle of approximately 15° to 38° with respect to the vertical line.

The pair of arm guides 60A and 60B may comprise a rear guide 60A and a front guide 60B.

The rear guide 60A may be closer to the rear plate 1a of the main body 1 of the rear plate 1a of the main body 1 and the outlet 8 of the arm body 6.

The rear guide 60A may be disposed inclined forward with respect to a vertical line. The lower end of the rear guide 60A may be inclined forward and downward.

The rear guide 60A may be disposed at an angle Θ2 of approximately 15° to 38° with respect to the vertical line, corresponding to the inclined angel of the front guide 60B. The rear guide 60A may be disposed inclined at an angle of approximately 25° to the vertical line.

The front guide 60B may be closer to the outlet 8 of the arm beady 6 of the rear plate 1a of the main body 1 and the outlet 8 of the arm beady 6.

The front guide 60B may be located in front of the rear guide 60B.

The front guide 60B may be disposed inclined backward with respect to the vertical line. The lower end of the front guide 60B may be inclined rearward and downward.

The front guide 60B may be disposed at an angle Θ3 of approximately 15° to 38° with respect to the vertical line, based on the pulling out angle at which the charging cable 2 is pulled out. The front guide 60B may be disposed at an angle of approximately 25° to the vertical line.

The rear guide 60A and the front guide 60B may be disposed inclined at the same angle or inclined at different angles.

The rear guide 60A and the front guide 60B may be inclined at different angles Θ2 and Θ3 with respect to the vertical line.

The angle Θ2 at which the rear guide 60A is disposed may not be the same as the angle Θ3 at which the front guide 60B is disposed. An angle Θ2 at which the rear guide 60A may be greater or smaller than an angle Θ3 of the front guide 60B.

The charging cable 2 extending upward in the inner space S2 of the cable cover 10 is guided by the rear guide 60A, since the rear guide 60A is inclined in the forward direction, the charging cable 2 is not bent or curved abruptly, and the upper cable 2d can be pulled in the rear guide 60A.

The upper cable 2d may extend substantially in the front-back direction X in the arm space S1. The upper cable 2d extending in the front-back direction (X) enters the front guide 60B, can be guided by the front guide 60B, and then can be taken out through the outlet 8 of the arm rail 7.

Since the front guide 60B is inclined rearward, the upper cable 2d is not bent or curved abruptly and can be pulled out through the outlet 8 while maintaining a straight shape as much as possible.

When the charging cable 2 is pulled out or lead in, the operating force is increased, and it is preferable that the friction area between the charging cable 2 and the arm pulley 62 be minimized.

In addition, the difference between the pulling out angle and the lead-in angle may be corrected by the mounter 6d, and the charging cable 2 may be bent or curved while maintaining a curvature within a set range.

The rear guide 60A close to the rear plate 1a of the body 1 and the front guide 60B close to the outlet 8 of the arm body 6 can maintain the curvature of the charging cable 2, and when the difference between the pulling out angle and the lead in angle is corrected by the mounter 6d, the operating force can be minimized, and even the disabled person can easily use the charging cable 2.

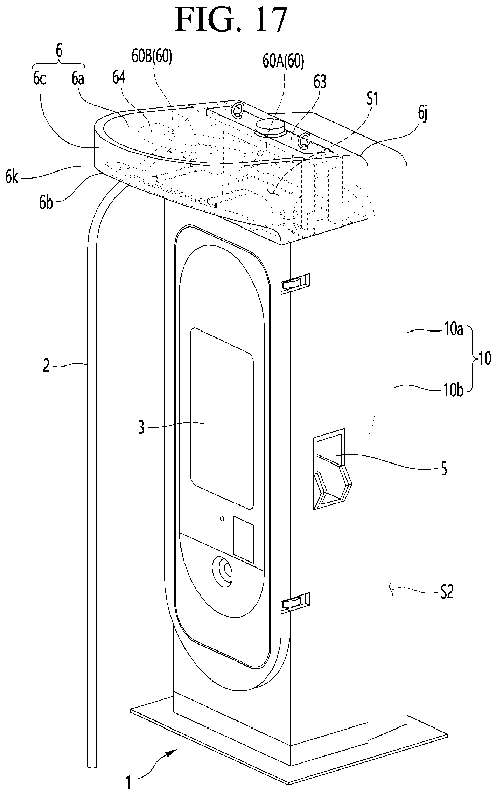

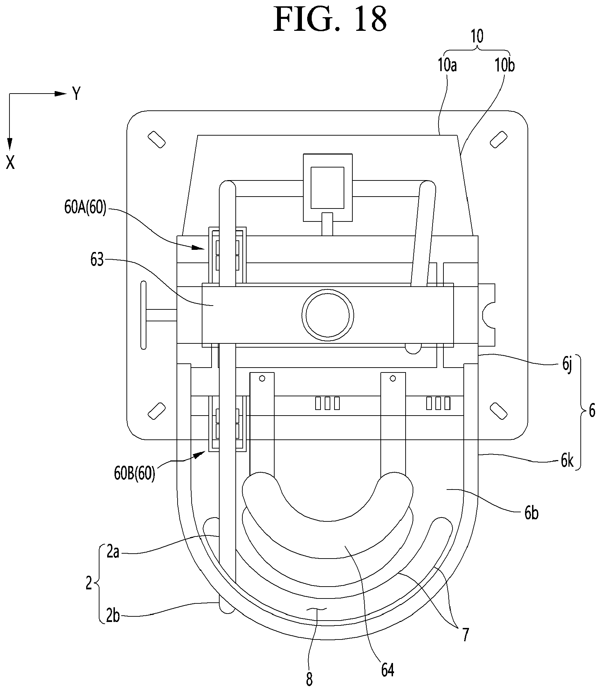

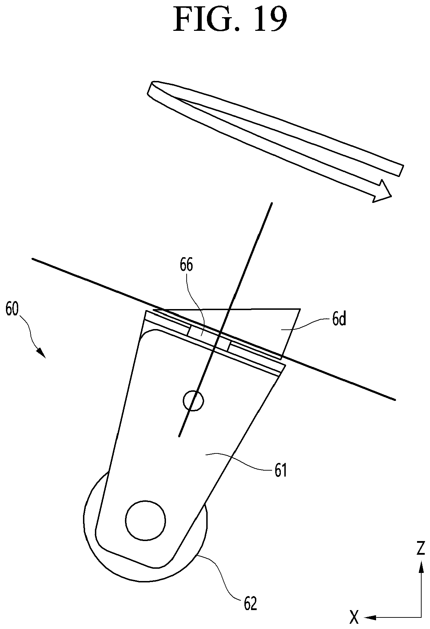

FIG. 17 is a diagram showing the other example of a charger according to this embodiment; FIG. 18 is a diagram showing an example of an arm guide rail according to the present embodiment; and FIG. 19 is a diagram showing an example of an arm guide according to the present embodiment.

The charger may comprise a main body 1 to which a charging cable 2 is connected; an arm body 6 disposed on the main body 1 and having an arm space S1; an arm rail 7 formed in the arm body 6 and having the outlet 8 through which the charging cable 2 passes, and an arm guide 60 accommodated in the arm space S1 and guiding the charging cable 2.

The main body 1 may be the same as or similar to the main body 1 shown in FIGS. 1 to 5, and the same reference numeral is used to avoid redundant description, and detailed descriptions thereof are omitted.

The charging cable 2 may be the same as or similar to the charging cable 2 shown in FIGS. 1 to 6, and the same reference numeral is used to avoid redundant description, and detailed descriptions thereof are omitted.

The arm body 6 may be disposed above the main body 1.

The arm body 6 may comprise an upper plate 6a, a lower plate 6b, and a border body 6c. The arm space S1 may be formed by the upper plate 6a, the lower plate 6b, and the border body 6

The arm body 6 may be divided into an upper body 6j disposed above the main body 1 and a protruding body 6k protruding forward from the upper body 6j.

The upper body 6j may be formed by a rear portion of the top plate 6a and a rear portion of the border body 6c.

The protruding body 6k may be formed by the front portion of the upper plate 6a, the front portion of the border body 6c, and the lower plate 6b.

The lower plate 6b of the protruding body 6k may be inclined toward the front lower side.

The arm body 6 may be the same as or similar to the arm body 6 shown in FIGS. 1 to 6, and to avoid redundant description, the same reference numerals are used and detailed description thereof will be omitted.

The arm rail 7 may be formed on the lower plate 6b of the protruding body 6k. The arm rail 7 may be the same as or similar to the arm rail 7 shown in FIG. 6, and the same reference numeral is used to avoid redundant description, and detailed descriptions thereof are omitted.

A plurality of arm guides 60 may be provided. A pair of arm guides 60 may be provided, and at least one of the pair of arm guides 60A and 60B may be disposed inclined toward the rear. The pair of arm guides 60A and 60B may comprise a rear guide 60A and a front guide 60B. The pair of arm guides 60A and 60B may be disposed gradually closer toward the lower side.

The arm guide 60 may be the same as or similar to the arm guide 60 shown in FIG. 16, and the arm guide 60 comprises an arm bracket 61 and at least one arm pulley 62 rotatably disposed on the arm bracket 61, to avoid redundant description, the same reference numeral is used and detailed description thereof will be omitted.

As shown in FIG. 19, at least one of the plurality of arm guides 60 may be disposed to be rotated around the rotation axis 66. The rotating shaft 66 may be rotatably disposed on the mounter 6d.

Each of the rear guide 60A and the front guide 60B may be rotatably installed. It is also possible that only one of the rear guide 60A and the front guide 60B is rotatably installed and the other is fixedly installed. Hereinafter, it will be described that each of the rear guide 60A and the front guide 60B is rotatably installed, but is not limited thereto.

The rear guide 60A may be rotated around the rotation shaft 66. The rotation shaft 66 may be provided to the arm bracket 61 of the rear guide 60A. The rear guide 60A may swing around the rotation shaft 66.

The front guide 60B may be rotated around the rotation shaft 66. The rotating shaft 66 may be provided to the arm bracket 61 of the front guide 60B. The front guide 60B may swing around the rotation axis 66.

The charger may further comprise an arm guide rail disposed on the arm body 6 and guiding the arm guide 60.

The arm guide rail may hold the arm guide 60 so that the arm guide 60 is movable.

The arm guide rail may have an arc shape or a long straight-line shape in the left and right directions.

A plurality of arm guide rails may be provided. The plurality of arm guide rails may comprise a rear arm guide rail 63 and a front arm guide rail 64.

The rear arm guide rail 63 may be a straight rail. The rear arm guide rail 63 may be formed in a long straight shape in the left and right directions. The rear guide 60A may be guided in the longitudinal direction of the rear arm guide rail 63 along the rear arm guide rail 63. The rotating shaft 66 of the rear guide 60A or the mounter 6d may be slidably disposed on the rear arm guide rail 63. The rotating shaft 66 of the rear guide 60A or the mounter 6d can be slide-guided on the rear arm guide rail 63. The rear guide 60A may be guided in the left and right direction Y along the rear arm guide rail 63.

The arm pulley 62 of the rear guide 60A may be positioned on the rear arm guide rail 6 , and the center of the swing motion of the arm pulley 62 may coincide with the rear arm guide rail 63.

The rear guide 60A may be rotated around the rotation shaft 66 while being guided along the rear arm guide rail 63.

When the charging cable 2 moves in the left and right direction Y, the rear guide 60A can be slide-guided in the left and right direction Y while being rotated, and sudden bending or wear of the charging cable 2 can be minimized., twisting of the charging cable 2 can be minimized.

The front arm guide rail 64 may be a curved rail. The front arm guide rail 64 may have an arc shape. An imaginary line connecting both ends of the front arm guide rail 64 may be parallel to the rear arm guide rail 63. The front guide 60B may be guided in the longitudinal direction of the front arm guide rail 64 along the front arm guide rail 64. The rotating shaft 66 of the front arm guide 60A or the mounter 6d may be slidably disposed on the front arm guide rail 64. The rotating shaft 66 of the front arm guide 60A or the mounter 6d can be slide-guided on the front arm guide rail 64. The front guide 60B may be guided in an arc-shaped trajectory along the front arm guide rail 64.

The front arm guide rail 64 may be closer to the outlet 8 than the rear arm guide rail 63.

The arm pulley 62 of the front guide 60B may be positioned on the front arm guide rail 64 and the center of the swing motion of the arm pulley 62 may coincide with the front arm guide rail 64.

The front guide 60B may be rotated around the rotation shaft 66 while being guided along the front arm guide rail 64.

When there is no movement of the charging cable 2, the length of the portion located inside the arm body 6 of the charging cable 2 may be constant.

When the charging cable 2 moves in the left and right direction Y, the front guide 60B can be slid and guided in the longitudinal direction of the front arm guide rail 64 while being rotated, sudden bending or abrasion of the charging cable 2 can be minimized.

The other example of the charger shown in FIGS. 17 to 19 may have the same or similar configuration and operation as the charger shown in FIGS. 1 to 16 other than the rotating shaft 66 and the arm guide rails 34 and 35. There is, and the same reference numerals are used for other configurations other than the rotating shaft 66 and the arm guide rails 34 and 35. The description thereof is omitted to avoid redundant description.

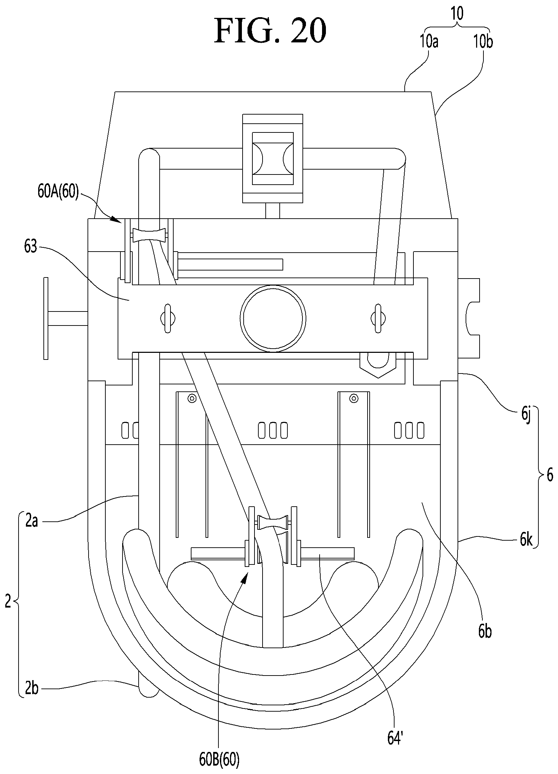

FIG. 20 is a view showing another example of an arm guide rail according to the present embodiment.

The arm guide 60 shown in FIG. 20 may be the same as or similar to the arm guide 60 shown in FIGS. 18 and 19, and to avoid redundant description, the same reference numeral is used and detailed description thereof will be omitted.

The arm guide rail shown in FIG. 20 may comprise a rear arm guide rail 63 and a front arm guide rail 64'.

The rear arm guide rail 63 may be the same as or similar to the rear arm guide rail 63 shown in FIG. 18, and to avoid redundant description, the same reference numeral is used and detailed descriptions thereof are omitted.

The front arm guide rail 64' may be a straight rail. The front arm guide rail 64' may be formed in a long straight shape in the left-right direction (Y). The front arm guide rail 64' may be parallel to the rear arm guide rail 63. The height of the front arm guide rail 64' may be different from that of the rear arm guide rail 63. The front guide 60B may be guided in the longitudinal direction Y of the front arm guide rail 64' along the front arm guide rail 64'. The rotating shaft 66 of the front guide 60B or the mounter 6d may be slidably disposed on the front guide 60B. The rotating shaft 66 of the front guide 60B or the mounter 6d can be slide-guided to the front guide 60B. The front guide 60B may be linearly guided in the left-right direction Y along the front arm guide rail 64'.

The front arm guide rail 64' may be closer to the outlet 8 than the rear arm guide rail 63, and the front guide 60B is guided along the front arm guide rail 64' while rotating the shaft 66 can be rotated around.

In this case, the arm pulley 62 of the front guide 60B may be positioned on the front arm guide rail 64 ', and the center of the swing motion of the arm pulley 62may coincide with the front arm guide rail 64 '.

When there is no movement of the charging cable 2, the length of the portion located inside the arm body 6 of the charging cable 2 may be constant. The front guide 60B may be positioned on the front arm guide rail 64' so that the cable length difference is minimized.

When the charging cable 2 moves in the left and right direction Y, the front guide 60B can be slid and guided in the left and right direction Y while being rotated, and rapid bending or wear of the charging cable 2 can be minimized, and the charging cable 2 can be gently bent in the left and right direction Y by the front guide 60B.

Another example of the arm guide rail shown in FIG. 20 may be the same as or similar to the front arm guide rail 64 shown in FIG. 18 in configuration other than the shape and guide direction of the front arm guide rail 64', and to avoid redundant description, the same reference numeral is used and detailed descriptions thereof are omitted.

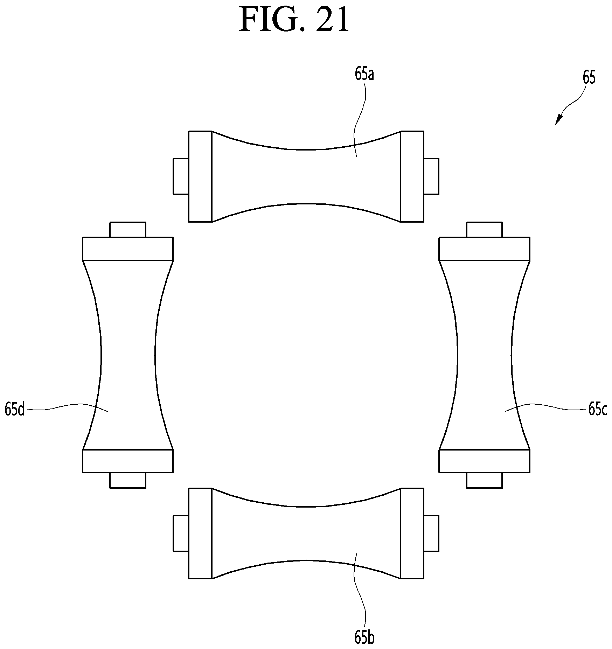

FIG. 21 is a view showing a roller disposed on the arm body according to the present embodiment.

The charger may further comprise at least one roller 65 in contact with the charging cable 2.

At least one roller 65 may be rotatably disposed on the lower plate 6b of the arm body 6. A roller accommodating portion in which a roller can be accommodated may be recessed in the lower plate 6b of the arm body 6.

The roller 65 may be rotatably accommodated in the roller accommodating portion.

It is preferable that a plurality of rollers 65 are provided.

The plurality of rollers 65 may comprise a rear roller 65a, a front roller 65b, a left roller 65c and a right roller 65d.

A plurality of rollers 65 may be disposed on the arm body 6 to be spaced apart from each other.

The roller 65 may be positioned close to the arm rail 7 of the lower plate 6b of the arm body 6, and abrasion of the coating of the charging cable 2 may be minimized.

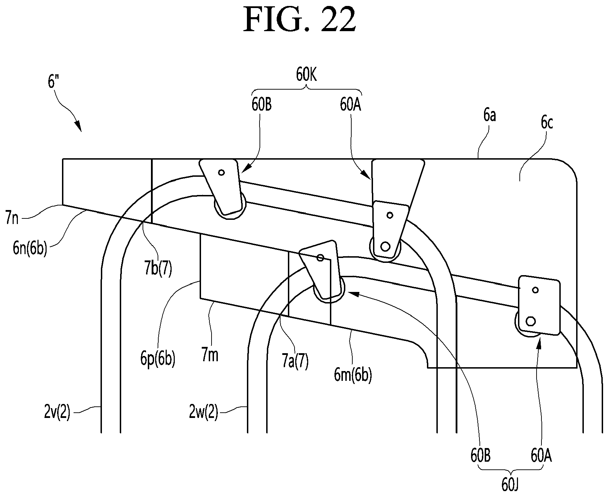

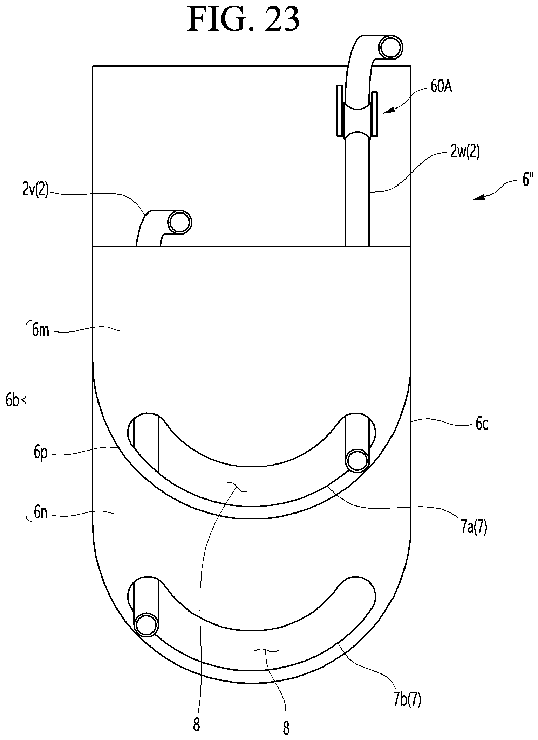

FIG. 22 is a cross-sectional view showing a modified example of the arm body according to the present embodiment; and FIG. 23 is a bottom view showing a modified example of the arm body according to the present embodiment.

A plurality of charging cables 2 may be connected to the main body 1.

When the plurality of charging cables 2 are connected to the main body 1, it is preferable that the plurality of charging cables 2 do not interfere as much as possible, and a modification of the arm body 6 "is a plurality of charging cables 2 is an example of minimizing interference between the plurality of charging cables 2.

The plurality of charging cables 2 are not limited in number, such as two, three, four, etc., but hereinafter, for convenience of description, the plurality of charging cables 2 comprise the first charging cable 2w and the second charging cable 2v.

The arm rail 7 may comprise a lower arm rail 7a through which one of the plurality of charging cables 2 passes and an upper arm rail 7b through which the other of the plurality of charging cables 2 passes.

One of the plurality of charging cables 2 may be the first charging cable 2w or may be a lower charging cable.

The other of the plurality of charging cables 2 may be the second charging cable 2v and may be an upper charging cable.

The lower arm rail 7a and the upper arm rail 7b may be separated from each other.

The height of the upper arm rail 7b may be higher than that of the lower arm rail 7a.

The arm body 6" may comprise a lower protruding body 7m on which a lower arm rail 7a is formed and an upper protruding body 7n on which an upper arm rail 7b is formed.

The lower protruding body 7m may be disposed below the upper protruding body 7n.

The upper protruding body 7n may protrude more forward than the lower protruding body 7m.

The arm body 6" may comprise an upper plate 6a, a lower plate 6b, and a border body 6c, and the lower plate 6b may have a shape bent like a step shape.

The lower plate 6b comprises a first lower plate portion 6m on which the lower arm rail 7a is formed, a second lower plate portion 6n on which the upper arm rail 7b is formed, and a connection portion 6p connecting the first lower plate portion 6m and the second lower plate portion 6n.

The first lower plate portion 6m may form a lower surface of the lower protruding body 7m. The first lower plate portion 6m may be inclined toward the front lower side.

The connecting portion 6p may form the front surface of the lower protruding body 7m. The connecting portion 6p may be vertical.

The second lower plate portion 6n may form a lower surface of the upper protruding body 7n. The second lower plate portion 6n may be formed to be inclined toward the front lower side.

A plurality of arm guides 60 may be provided in the arm body 6.

The plurality of arm guides 60 comprise a lower arm guide 60J accommodated in the lower protruding body 7m; and an upper arm guide 60K accommodated in the upper protruding body 7n.

The lower arm guide 60J may guide the first charging cable 2w.

The upper arm guide 60K may guide the second charging cable 2v. The upper arm guide 60K may be spaced apart from the lower arm guide 60J.

Each of the lower arm guide 60J and the upper arm guide 60K may comprise a rear guide 60A and a front guide 60B.

The front guide 60B of the lower arm guide 60J may be positioned ahead of the rear guide 60A of the upper arm guide 60K.

The lower arm guide 60J may be disposed biasedly on one side (eg, the left side) of the left side and the right side of the border body 6c.

The upper arm guide 60K may be disposed biasedly on the other side (for example, the right side) of the left side and the right side of the border body 6c.

According to this embodiment, the arm body can protect and hide the charging cable.

In addition, since the arm guide guides the charging cable, abrupt bending or curving of the charging cable can be minimized and twisting of the charging cable can be minimized.

In addition, a pair of arm guides guide the charging cable, so that the charging cable can be guided as gently or smoothly as possible without being suddenly bent.

In addition, since the arm guide is guided by the arm guide rail when the charging cable is moved, abrupt bending or curving of the charging cable can be minimized.

In addition, since the arm guide is rotated around the axis of rotation, abrupt bending or curving of the charging cable can be minimized and the charging cable can be guided as smoothly as possible.

In addition, since the charging cable is guided by the roller, the abrasion of the coating of the charging cable can be minimized.

The above description is merely an example of the technical idea of the present invention, and various modifications and variations can be made to those skilled in the art without departing from the essential characteristics of the present invention.

Therefore, the embodiments disclosed in the present invention are not intended to limit the technical idea of the present invention, but to explain, and the scope of the technical idea of the present invention is not limited by these embodiments.

The protection scope of the present invention should be construed according to the claims below, and all technical ideas within the equivalent range should be construed as being comprised in the scope of the present invention.

## Claims

1. A charger comprising:
a main body (1) to which a charging cable (2) is connected;
an arm body (6) disposed on the main body (1) and having an arm space (S1);
an arm guide (60) accommodated in the arm space (S1) and guiding the charging cable (2); and
an arm rail (7) formed on the arm body (6) and having an outlet (8) through which the charging cable (2) passes,
wherein a portion of the charging cable (2) accommodated in the arm space (S 1) is disposed to have at least one curvature.

2. The charger according to claim 1, wherein the arm body (6) is disposed above the main body (1).

3. The charger according to claim 1 or 2,
wherein the arm body (6) comprises a protruding body (6k) protruding forward,
wherein the arm rail (7) is formed on a lower plate (6b) of the protruding body (6k).

4. The charger according to claim 3,
wherein the lower plate (6b) is disposed inclined to face a front lower direction.

5. The charger according to claim 3, further comprising at least one roller (65) rotatably disposed on the lower plate (6b) and in contact with the charging cable (2).

6. The charger according to any one of claims 1 to 5,
wherein the arm guide (20) comprises
an arm bracket (61); and
at least one arm pulley (62) rotatably disposed on the arm bracket (61).

7. The charger according to any one of claims 1 to 6,
wherein a pair of the arm guides (60A and 6OB) are provided,
wherein the pair of arm guides (60A and 6OB) are disposed so that a portion from a first point of the charging cable to a second point of the charging cable (2) has one curvature,
wherein the second point is located at the outlet (8).

8. The charger according to any one of claims 1 to 6,
wherein a pair of the arm guides (60A and 6OB) are provided,
wherein the charging cable (2) comprises
a first point;
a second point located at the outlet (98); and
a third point located between the pair of arm guides (60A and 6OB),
wherein the pair of arm guides (60A and 6OB) are disposed so that a portion from the first point to the third point has a first curvature, and a portion from the third point to the second point has a second curvature,
wherein the first curvature and the second curvature are different.

9. The charger according to any one of claims 1 to 6,
wherein a pair of the arm (60A and 6OB) guides are provided,
wherein the pair of arm guides comprise a front guide (6OB) and a rear guide (60A),
wherein the front guide (6OB) is inclined at an angle of 15° to 30° with respect to the vertical line.

10. The charger according to any one of claims 1 to 6,
wherein a pair of the arm guides (60A and 6OB) are provided,
wherein the pair of arm guides (60A and 6OB) comprise a front guide (6OB) and a rear guide (60A),
wherein the front guide (6OB) and the rear guide (60A) are inclined at the same angle or at different angles.

11. The charger according to any one of claims 1 to 6,
wherein a pair of the arm guides (60A and 6OB) are provided,
wherein the pair of arm guides (60A and 6OB) gradually become closer toward the lower side.

12. The charger according to claim any one of claims 1 to 6,
wherein the arm guide is provided in plurality,
wherein at least one of the plurality of arm guides is disposed to be rotated about a rotation axis (66).

13. The charger according to any one of claims 1 to 12, further comprising;
an arm guide rail disposed on the arm body (6) and slidingly guiding the arm guide.

14. The charger according to any one of claims 1 to 13,
wherein a plurality of charging cables is connected to the main body (1),
wherein the arm rail (7) comprises
a lower arm rai l(7a) through which one of the plurality of charging cables passes, and
an upper arm rail (7b) through which the other of the plurality of charging cables passes.

15. The charger according to claim 14,
wherein the arm body (6) comprises
a lower protruding body (7m) in which the lower arm rail (7a) is formed, and
an upper protruding body (7n) in which the upper arm rail (7b) is formed.
wherein the arm guide (60) is provided in plurality,
wherein the plurality of arm guides (60) comprises
a lower arm guide (60J) accommodated in the lower protruding body (7m); and
an upper arm guide (60K) accommodated in the upper protruding body (7n).
